# EUROPÄISCHE PATENTSCHRIFT

(11) **EP 4 537 059 B1**
(45) Veröffentlichungstag und Bekanntmachung des Hinweises auf die Patenterteilung: **14.01.2026**
(21) Anmeldenummer: 23730751.7
(22) Anmeldetag: 01.06.2023
(51) Int. Cl.: G01F 1/32, G01L 1/12

(54) **MESSSYSTEM**
MEASURING SYSTEM
SYSTÈME DE MESURE

(30) Priorität: 13.06.2022 DE 102022114875
(43) Veröffentlichungstag der Anmeldung: 16.04.2025
(73) Patentinhaber: Endress+Hauser SE+Co. KG, 79689 Maulburg (DE)
(72) Erfinder: LOPATIN, Sergey, 79540 Lörrach (DE); THAM, Anh Tuan, 14089 Berlin (DE); KLÖFER, Peter, 79585 Steinen (DE); FREY, Volker, 79650 Schopfheim (DE); SCHERER, Benjamin, 79254 Oberried (DE)
(74) Vertreter: Endress + Hauser Group Services (Deutschland) AG+Co. KG
(86) Internationale Anmeldenummer: PCT/EP2023/064690
(87) Internationale Veröffentlichungsnummer: WO 2023/241933

(56) Entgegenhaltungen:
- DE-A1- 102005 023 115
- JP-A- 2002 162 263
- JP-A- H04 148 825
- JP-A- S5 679 208
- US-A1- 2017 284 841

## Beschreibung

Die Erfindung betrifft ein Messsystem zu Messen wenigstens eines, insbesondere zeitlich veränderlichen, Strömungsparameters, insbesondere einer Strömungsgeschwindigkeit und/oder eines Volumenstromes und/oder eines Massenstromes, eines in einer Rohrleitung strömenden, fluiden Messstoffs, insbesondere nämlich eines Gases, einer Flüssigkeit oder einer Dispersion, insbesondere ein Vortex-Durchflussmessgerät.

In der Prozessmess- und Automatisierungstechnik werden für die Messung von Strömungsgeschwindigkeiten von in Rohrleitungen strömenden Fluiden, insb. schnellströmenden und/oder heissen Gasen und/oder Fluidströmen von hoher Reynoldszahl (Re), bzw. von mit einer jeweiligen Strömungsgeschwindigkeit (u) korrespondierenden Volumen- oder Massenströmen oftmals als Vortex-Durchflussmessgeräte ausgebildete Messsysteme verwendet. Beispiele für solche, Messsysteme sind u.a. aus der JP S56 79208 A, der JP H04148825 A, der JP 2002 162263 A, der US 2006/0230841, der US 2008/0072686, der US 2011/0154913, der US 2011/0247430, der US 2016/0123783, der US 2017/0284841, der US 2019/0094054, der US 60 03 384, der US 61 01 885, der US 63 52 000, der US 69 10 387 oder der US 69 38 496 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200" (http://www.de.endress.com/#products/prowirl).

Die gezeigten Messsysteme weisen jeweils einen in das Lumen der jeweiligen, beispielsweise nämlich als Anlagenkomponente eines Wärmeversorgungsnetzes oder eines Turbinenkreislaufes ausgebildeten, Rohrleitung bzw. in ein Lumen eines in den Verlauf nämlicher Rohrleitung eingesetzten Messrohrs hineinragenden, mithin vom Fluid angeströmten Staukörper zum Erzeugen von zu einer sogenannten Kármánschen Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit abhängigen Ablöserate (1/*f_{Vtx}*) am Staukörper generiert. Ferner weisen die Messsysteme einen in den Staukörper integrierten bzw. mit diesem verbundenen oder stromabwärts desselben, nämlich im Bereich der Karman'schen Wirbelstrasse in die Strömung, mithin in Lumen der hineinragenden Sensor auf, der dazu dient Druckschwankungen in der im strömenden Fluid ausgebildeten Kármánschen Wirbelstrasse zu erfassen und in ein die Druckschwankungen repräsentierendes Sensorsignal zu wandeln, nämlich ein - beispielsweise elektrisches oder optisches - Signal zu liefern, das mit einem innerhalb des Fluids herrschenden, infolge gegenläufiger Wirbel stromab des Staukörpers periodischen Schwankungen unterworfenen Druck korrespondiert bzw. das eine mit der Ablöserate der Wirbel korrespondierende Signalfrequenz (~ *f_{Vtx}*) aufweist.

Der Sensor weist dafür einen Verformungskörper sowie eine sich ausgehend von einer im wesentlichen planaren Oberfläche des Verformungskörpers erstreckenden - zumeist stabförmigen, plattenförmigen oder keilförmigen - Sensorfahne auf, und ist dafür eingerichtet, Druckschwankungen in der Kármán'schen Wirbelstrasse zu erfassen, nämlich in mit den Druckschwankungen korrespondierende Bewegungen des Verformungskörpers zu wandeln. Der Verformungskörper weist ein - zumeist kreisringförmiges - äusseres Randsegment auf, das dafür eingerichtet ist, mit einer dem Haltern des Verformungskörpers an einer Wandung eines Rohrs dienenden Fassung hermetisch dicht, beispielsweise nämlich stoffschlüssige, verbunden zu werden, derart, dass der Verformungskörper eine in der Wandung des Rohrs vorgesehene Öffnung überdeckt bzw. hermetisch verschliesst und dass die die Sensorfahne tragende Oberfläche des Verformungskörpers dem Fluid führenden Lumen des Messrohrs bzw. der Rohrleitung zugewandt ist, mithin die Sensorfahne in nämliches Lumen hineinragt. Der Verformungskörper ist typischerweise als eine dünne Membran ausgebildet und dabei so geformt, dass zumindest eine Membran-Dicke, gemessen als eine minimale Dicke eines durch das vorbezeichnete äussere Randsegment begrenzten inneren Membransegment, sehr viel kleiner als ein Membran-Durchmesser, gemessen als ein grösster Durchmesser einer durch das äussere Randsegment begrenzten Fläche ist. Um eine möglichst hohe Messemepfindlichkeit, nämliche eine möglichst hohe Empfindlichkeit des Sensors auf die zu erfassenden Druckschwankungen und zugleich eine möglichst hohe, nämlich oberhalb der höchsten zu messenden Ablöserate liegende mechanische Eigenfrequenz für den durch die Druckschwankungen erzwungenen Biegeschwingungsmode des Verformungskörpers mit der Sensorfahne zu erzielen, weisen derartige Verformungskörper etablierter Messsysteme typischerweise ein Durchmesser-zu-Dicke-Verhältnis auf, das etwa in der Grössenordnung von 20:1 liegt. Wie u.a. in den eingangs erwähnten US-A 2016/0123783, der US-A 2017/0284841, der US-A 2019/0094054, bzw. US-B 63 52 000 gezeigt, können Sensoren der in Rede stehenden Art gelegentlich zudem einen sich ausgehend von einer der die Sensorfahne tragende Oberfläche abgewandten Oberfläche des Verformungskörpers erstreckenden, zumeist stab-, platten- oder hülsenförmig ausgebildeten Ausgleichskörper aufweisen, der im besonderen dazu dient, aus Bewegungen der Sensorbaugruppe resultierenden Kräften bzw. Momenten, beispielsweise infolge von Vibrationen der Rohrleitung, zu kompensieren bzw. daraus resultierende unerwünschte Bewegungen der Sensorfahne zu vermeiden.

Zwecks des Generierens des Sensorsignals umfasst jeder der Sensoren ferner jeweils ein (mechanisch-zu-elektrisches) Wandlerelement, das typischerweise dafür eingerichtet ist, Bewegungen des Verformungskörpers zu erfassen und in ein elektrisches Sensorsignal zu wandeln. Bei den aus der US-A 2017/0284841, der US-A 2019/0094054 bzw. US-B 63 52 000 bekannten Sensoren ist nämliches Wandlerelement mittels einer Piezokeramik gebildet, beispielsweise in Form einer Piezo-Scheibe.

Der Sensor ist auf einer dem Fluid führenden Lumen abgewandten Seite ferner mit einer - typischerweise druck- und schlagfest gekapselten, ggf. auch nach aussen hin hermetisch abgedichteten - Umformer-Elektronik verbunden. Umformer-Elektroniken von industrietauglichen Messsysteme weisen üblicherweise eine entsprechende, mit dem Wandlerelement via Anschlussleitungen, ggf. unter Zwischenschaltung elektrischer Barrieren und/oder galvanischer Trennstellen, elektrisch verbundene digitale Messschaltung zum Verarbeiten des wenigstens einen vom Wandlerelement erzeugten Sensorsignals und zum Erzeugen von digitalen Messwerten für die jeweils zu erfassende Messgrösse, nämlich die Strömungsgeschwindigkeit, den Volumenstrom und/oder den Massenstrom, auf. Die üblicherweise in einem Schutz-Gehäuse aus Metall und/oder schlagfestem Kunststoff untergebrachte Umformer-Elektronik industrietauglicher bzw. in der industriellen Messtechnik etablierter Messsysteme stellen zudem zumeist auch einem Industriestandard, beispielsweise der DIN IEC 60381-1, konforme externe Schnittstellen für die Kommunikation mit übergeordneten, beispielsweise mittels Speicherprogrammierten Steuerungen (SPS) gebildete, Mess- und/oder Reglersysteme bereit. Ein solche externe Schnittstelle kann beispielsweise als in eine Stromschleife eingliederbarer Zweileiter-Anschluss ausgebildete und/oder mit etablierten industriellen Feldbussen kompatible ausgebildet sein.

Nicht zuletzt aufgrund des Messprinzip bedingt relativ hohen Durchmesser-zu-Dicke-Verhältnisse des Verformungskörpers weisen konventionelle Sensoren der in Rede stehenden Art - selbst bei Verwendung einer hochfesten Nickelbasislegierung, wie z.B. Inconel 718 (Special Metals Corp.), als Material - zumeist eine Druckfestigkeit, nämlich einen maximal zulässiger Betriebsdruck, oberhalb dem eine nicht reversible plastische Verformung des Sensors oder gar ein Bersten des Verformungskörpers zu besorgen ist, auf, die für in bestimmten Anwendungen gelegentlich tatsächlich auftretende extrem hohe Drücke bzw. Druckstösse zu niedrig sein kann, bzw. weisen solche Sensoren eine für solche Anwendungen zu ungünstige Abhängigkeit nämlicher Druckfestigkeit von der Betriebstemperatur (Druck-Temperatur-Kurve) auf, derart, dass beispielsweise für in eigentlich prädestinierten Heissdampfanwendungen mit Dampftemperaturen von über 200 °C gelegentlich, beispielsweise infolge sogenannter kondensationsinduzierte Wasserschlägen (CIWH - condensation induced water hammers), auftretende Betriebsdrücken oberhalb von 100 bar ein zerstörungsfreies Widerstehen nicht mehr garantiert werden kann.

Eine neuere Entwicklung im Bereich der Sensorik stellen sogenannte Quantensensoren dar, bei welchen unterschiedlichste Quanteneffekte zur Bestimmung verschiedener physikalischer und/oder chemischer Messgrößen ausgenutzt werden. Im Bereich der industriellen Prozessautomatisierung sind solche Ansätze insbesondere mit Hinblick auf ein zunehmendes Bestreben zur Miniaturisierung bei gleichzeitiger Steigerung der Leistungsfähigkeit der jeweiligen Sensoren interessant.

Quantensensoren basieren darauf, dass bestimmte Quantenzustände einzelner Atome sehr genau kontrolliert und ausgelesen werden können. Auf diese Weise sind beispielsweise präzise und störungsarme Messungen von elektrischen und/oder magnetischen Feldern sowie Gravitationsfeldern mit örtlichen Auflösungen im Nanometerbereich möglich. In diesem Zusammenhang sind verschiedene Spin-basierte Sensoranordnungen bekannt geworden, für welche atomare Übergänge in Kristallkörpern zur Detektion von Änderungen von Bewegungen, elektrischen und/oder magnetischen Feldern oder auch Gravitationsfeldern eingesetzt werden. Darüber hinaus sind auch unterschiedliche auf quantenoptischen Effekten basierende Systeme bekannt geworden, wie beispielsweise Quantengravimeter, NMR Gyroskope oder optisch gepumpte Magnetometer, wobei insbesondere letztere u.a. auf Gaszellen basieren.

Beispielsweise sind im Bereich Spin-basierter Quantensensoren verschiedene Vorrichtungen bekannt geworden, welche atomare Übergänge, beispielsweise in verschiedenen Kristallkörpern, ausnutzen, um bereits geringe Änderungen von Bewegungen, elektrischen und/oder magnetischen Feldern oder auch Gravitationsfeldern zu erkennen. Typischerweise wird als Kristallkörper Diamant mit zumindest einer Stickstoff-Fehlstelle, Siliziumcarbid mit zumindest einer Silizium-Fehlstelle oder hexagonales Bornitrid mit zumindest einem Fehlstellen-Farbzentrum verwendet. Die Kristallkörper können grundsätzlich eine oder mehrere Fehlstellen aufweisen.

Aus der DE 10 2017 205 099 A1 ist eine Sensorvorrichtung mit einem Kristallkörper mit zumindest einer Fehlstelle, einer Lichtquelle, einer Hochfrequenzeinrichtung zum Beaufschlagen des Kristallkörpers mit einem Hochfrequenzsignal, und einer Detektionsvorrichtung zur Detektion eines magnetfeldabhängigen Fluoreszenzsignals bekannt geworden. Die Lichtquelle ist auf einem ersten Substrat und die Detektionseinrichtung auf einem zweiten Substrat angeordnet, während die Hochfrequenzeinrichtung und der Kristallkörper auf beiden, miteinander verbundenen Subtraten angeordnet sein können. Als Messgrößen kommen externe Magnetfelder, elektrische Ströme, eine Temperatur, mechanischen Spannung oder ein Druck in Frage. Eine ähnliche Vorrichtung ist aus der DE 10 2017 205 265 A1 bekannt geworden.

Die DE 10 2014 219 550 A1 beschreibt einen Kombinationssensor zur Erfassung von Druck, Temperatur und/oder Magnetfeldern, wobei das Sensorelement eine Diamantstruktur mit zumindest einem Stickstoff-Fehlstellen-Zentrum aufweist.

Die DE 10 2018 214 617 A1 offenbart eine Sensoreinrichtung, welche ebenfalls einen Kristallkörper mit einer Anzahl von Farbzentren, bei welcher zur Steigerung der Effektivität und zur Miniaturisierung verschiedene optische Filterelemente verwendet werden.

Aus der bisher unveröffentlichten deutschen Patentanmeldung mit dem Aktenzeichen 10 2020 123 993.9 ist eine Sensorvorrichtung bekannt geworden, welche anhand eines Fluoreszenzsignals eines Kristallkörper mit zumindest einer Fehlstelle eine Prozessgröße eines Messstoffs auswertet. Zudem wird anhand einer mit dem Magnetfeld im Zusammenhang stehenden Größe, wie beispielsweise der magnetischen Permeabilität oder magnetischen Suszeptibilität, eine Zustandsüberwachung des jeweiligen Prozesses durchgeführt. Aus der ebenfalls bisher unveröffentlichten deutschen Patentanmeldung mit dem Aktenzeichen 10 2021 100223.0 ist darüber hinaus ein Grenzstandsensor bekannt geworden, bei welchem anhand der Fluoreszenz eine Aussage über einen Grenzstand ermittelt wird.

Bei vielen Anwendungen in der Prozessmess- und Automatisierungstechnik werden sehr zuverlässige Messsysteme vorausgesetzt, bei denen sichergestellt ist, dass die vorgegebene Messgenauigkeit eingehalten wird.

Der Erfindung liegt die Aufgabe zugrunde, ein Messsystem zum Messen wenigstens eines Strömungsparameters vorzuschlagen, das zuverlässig Messwerte mit einer vorgegebenen Messgenauigkeit liefert.

Die Aufgabe wird gelöst durch das Messsystem nach Anspruch 1.

Das erfindungsgemäße Messsystem zum Messen wenigstens eines, insbesondere zeitlich veränderlichen, Strömungsparameters, insbesondere einer Strömungsgeschwindigkeit und/oder einer Volumenstrom und/oder einer Massenstrom, eines in einer Rohrleitung strömenden, fluiden Messstoffs, insbesondere nämlich eines Gases, einer Flüssigkeit oder einer Dispersion, umfasst:
- ein in den Verlauf nämlicher Rohrleitung einsetzbares Rohr mit einem Lumen, das dafür eingerichtet ist, den in der Rohrleitung strömende Messstoff zu führen bzw. von nämlichem Messstoff durchströmt zu werden;
- einen im Lumen des Rohrs angeordneten, insbesondere prismatischen oder zylindrischen, Staukörper, der dafür eingerichtet ist, im daran vorbei strömenden Messstoff Wirbel mit einer von einer momentanen Strömungsgeschwindigkeit, u, nämlichen Messstoffs abhängigen Ablösefrequenz, *f_{V},* zu generieren, derart, dass im stromabwärts des Staukörpers strömenden Fluid eine Kármánsche Wirbelstrasse ausgebildet ist;
- einen stromabwärts des Staukörpers angeordneten Wirbelsensor,
   -- der wenigstens eine, insbesondere niedrigste und/oder stets oberhalb der Ablösefrequenz *f_{V}* liegende, mechanische Resonanzfrequenz, *f_{R}*, aufweist
   -- der eingerichtet ist, angeregt vom strömenden Messstoff, mechanische Schwingungen um eine statische Ruhelage auszuführen und wenigstens ein nämliche Schwingungen repräsentierendes, insbesondere elektrisches oder optisches, Wirbelsensorsignal bereitzustellen,
   -- und der ein magnetostriktives Material aufweist;
- eine Magnetfelderfassungseinheit, die dazu eingerichtet ist, eine Änderung eines Magnetfeldes zu messen, die durch die Einwirkung von mechanischen Kräften auf das magnetostriktive Material erzeugt wird und die dazu eingerichtet ist, ein nämliche Einwirkung repräsentierendes, insbesondere elektrisches oder optisches, Magnetfelderfassungssignal bereitzustellen;
- sowie eine, insbesondere mittels wenigstens eines Mikroprozessors gebildete, Umformer-Elektronik zum Auswerten des wenigstens einen Wirbelsensorsignals, zum Ermitteln von, insbesondere digitalen, Messwerten für den wenigstens einen Strömungsparameter und zum Ermitteln einer Funktionstüchtigkeit und/oder eine Plausibilitätsaussage über das von dem Wirbelsensor gelieferte Wirbelsensorsignal in Abhängigkeit des Magnetfelderfassungssignales.

Durch die Überwachung der Funktionstüchtigkeit des Messsystems ist sichergestellt, dass der Wirbelssensor während seiner Lebensdauer zuverlässig Messwerte innerhalb der zugesicherten Messgenauigkeit liefert. Überschreitet die Abweichung der Messwerte einen vorgegebenen Grenzwert, ist dies ein Hinweis darauf, dass das Messsystem gewartet oder ausgetauscht werden muss. Diese Überwachung kann kontinuierlich oder während entsprechend vorgesehener Wartungsintervalle erfolgen. Darüber hinaus ist alternativ oder additiv vorgesehen, dass das Messsystem kontinuierlich oder in vorgegebenen Zeitabständen redundante Messwerte liefert, die zumindest eine Plausibilitätsaussage bezüglich der gelieferten Messwerte erlauben. Dadurch ist es möglich, das erfindungsgemäße Messsystem auch in sicherheitskritischen Anwendungen einzusetzen.

Als Magnetostriktion wird die Änderung der geometrischen Abmessungen eines ferromagnetischen Körpers unter dem Einfluss eines Magnetfelds bezeichnet. Dieser Effekt ist bei allen ferromagnetischen Materialien messbar. Im Zusammenhang mit der Erfindung kommt der entgegengesetzte Effekt, der sog. Villari-Effekt, zum Tragen, d. h. es wird die Änderung des Magnetfeldes bzw. der magnetischen Eigenschaften des magnetostriktiven Materials unter dem Einfluss von auf das Material einwirkenden mechanischen Kräften betrachtet. Unter den Elementen bzw. Metallen in Reinform weisen Eisen Nickel und Cobalt bei Raumtemperatur ferromagnetische Eigenschaften auf. Als viertes Element mit ferromagnetischen Eigenschaften bei Raumtemperatur wurde Ruthenium in der metastabilen raumzentrierten tetragonalen Phase ausgemacht. Für die praktische Anwendung bieten sich ferromagnetische Legierungen wie z. B. AlNiCo, SmCo, Nd2Fe14B, Ni80Fe20 ("Permalloy"), oder NiFeCo-Legierungen ("Mumetall") an. Welches ferromagnetische Material in Verbindung mit der Erfindung zum Einsatz kommt, hängt davon ab, ob das ferromagnetische Material in Kontakt mit dem Messstoff kommt oder ob es von dem Messstoff isoliert angeordnet ist.

Das magnetostriktive Material selbst erzeugt kein eigenes Magnetfeld, verändert aber unter dem Einfluss einer einwirkenden Kraft seine Permeabilität µ. Um Änderungen des Magnetfeldes zu messen, ist es daher erforderlich, ein Offset-Magnetfeld zu erzeugen, z.B. durch einen Permanentmagneten oder eine Spule. So lassen sich Änderungen des Magnetfeldes infolge einer auf das magnetostriktive Material einwirkenden Kraft mittels der Magnetfelderfassungseinheit messen.

Vorteilhafte Ausgestaltung der Erfindung sind Gegenstand der Unteransprüche.

Eine Ausgestaltung sieht vor, dass der Wirbelsensor einen, insbesondere membranartigen und/oder scheibenförmigen, Verformungskörper mit einer dem Lumen zugewandten ersten Oberfläche und einer gegenüberliegenden, insbesondere zur ersten Oberfläche zumindest teilweise parallelen, zweiten Oberfläche aufweist, und
wobei der Wirbelsensor wenigstens ein oberhalb und/oder auf der zweiten Oberfläche des Verformungskörpers angeordnetes, insbesondere nämlich am Verformungskörper angebrachtes und/oder in dessen Nähe positioniertes, Wandlerelement aufweist, das dafür eingerichtet ist, Bewegungen des Verformungskörpers, insbesondere von dessen zweiter Oberfläche, zu erfassen und in das Wirbelsensorsignal zu wandeln.

Eine Ausgestaltung sieht vor, dass der Wirbelsensor eine sich ausgehend von der ersten Oberfläche des Verformungskörpers bis zu einem distalen Ende erstreckende, insbesondere plattenförmige oder keilförmige, Sensorfahne aufweist.

Eine Ausgestaltung sieht vor, dass der Verformungskörper aus dem magnetostriktiven Material gefertigt, mit dem magnetostriktiven Material beschichtet oder zumindest abschnittsweise durch einen das magnetostriktiven Material aufweisenden Körper bedeckt ist.

Eine Ausgestaltung sieht vor, dass die Sensorfahne aus dem magnetostriktiven Material gefertigt, mit dem magnetostriktiven Material beschichtet oder zumindest abschnittsweise durch einen das magnetostriktiven Material aufweisenden Körper bedeckt ist.

Eine Ausgestaltung sieht vor, dass der Verformungskörper oder die Sensorfahne zumindest in einem Teilbereich, in dem eine maximale mechanische Spannung oder eine maximale Auslenkung bei der Schwingung um die statische Ruhelage auftritt, mit der Beschichtung aus dem magnetostriktiven Material versehen, aus dem magnetostriktiven Material gefertigt oder durch den das magnetostriktive Material aufweisenden Körper bedeckt ist.

Im Prinzip können in Verbindung mit der Erfindung bekannte Magnetfelderfassungseinheiten zum Einsatz kommen. Bevorzugt aber handelt es sich bei der Magnetfelderfassungseinheit um einen Quantensensor. Quantensensoren sind in unterschiedlichsten Ausgestaltungen bekannt geworden. Sie nutzen unterschiedliche Quanteneffekte zur Bestimmung verschiedener physikalischer und/oder chemischer Prozessgrößen aus. Im Bereich der industriellen Prozessautomatisierung ist der Einsatz von Quantensensoren in zweierlei Hinsicht interessant: Quantensensoren ermöglichen die Miniaturisierung der eingesetzten Sensoren und steigern gleichzeitig deren Leistungsfähigkeit.

Eine Ausgestaltung sieht vor, dass es sich bei der Magnetfelderfassungseinheit um einen Quantensensor handelt.

Eine Ausgestaltung sieht vor, dass der Quantensensor zumindest einen Kristallkörper mit zumindest einer magnetfeldempfindlichen Fehlstelle aufweist. Bevorzugt werden in Verbindung mit dem Messsystem zwei Typen von Quantensensoren eingesetzt. So kann es sich bei der Magnetfelderfassungseinheit um einen Quantensensor handeln, der zumindest einen Kristallkörper mit zumindest einer Magnetfeld-empfindlichen Fehlstelle aufweist. Bei dem Kristallkörper kann es sich beispielsweise um einen Diamanten mit zumindest einer Stickstoff-Fehlstelle, um Siliziumcarbid mit zumindest einer Silizium-Fehlstelle oder um hexagonales Bornitrid mit zumindest einem Fehlstellen-Farbzentrum handeln. Es können selbstverständlich auch mehrere Fehlstellen in dem Kristallkörper angeordnet sein. Diese sind bevorzugt linear angeordnet. Eine Erhöhung der Anzahl der Fehlstellen führt zu einer erhöhten Intensität, so dass die Messauflösung verbessert bzw. Intensitätsänderungen auch bei vergleichsweise schwachen Magnetfeldern detektierbar sind.

Aus der Patentliteratur sind bereits eine Vielzahl von Quantensensoren bekannt geworden, die in der Prozessautomatisierung eingesetzt werden können. So beschreibt die DE3742878A1 einen optischen Magnetfeldsensor, indem ein Kristall als magnetempfindliches optisches Bauteil verwendet wird.

In der DE 102016210259 A1 wird eine weitere Ausgestaltung für eine Sensorvorrichtung sowie eine Kalibrations- und Auswertemethode basierend auf Fehlstellen in einem Kristall vorgeschlagen. Die Sensorvorrichtung umfasst einen Kristallkörper mit zumindest einer Fehlstelle, eine Lichtquelle, eine Mikrowellenantenne zur Beaufschlagung des Kristallkörpers mit Mikrowellen, eine Detektionseinrichtung zur Erfassung einer Fluoreszenz von dem Kristallkörper, und eine Anlegeeinrichtung, mittels welcher ein Induktionsstrom an die Mikrowellenantenne anlegbar ist. So dient die Mikrowellenantenne zum einen zur Erzeugung der Mikrowellen und zur Erzeugung eines internen Magnetfelds. Das interne Magnetfeld ermöglicht eine Kalibrierung im fortlaufenden Betrieb.

Eine Ausgestaltung sieht vor, dass die Magnetfelderfassungseinheit eine, insbesondere optische, Anregungsvorrichtung zur Anregung der Fehlstelle oder zur Anregung der Gaszelle und eine, insbesondere optische, Detektionsvorrichtung zur Detektion eines magnetfeldabhängigen Signals des Kristallkörpers oder der Gaszelle aufweist.

Die Erfindung wird anhand der nachfolgenden Figuren näher erläutert. Es zeigt:
Fig. 1: eine perspektivische Ansicht auf ein Messsystem, insbesondere ein Vortex-Durchflussmessgerät;
Fig. 2a: eine perspektivische Ansicht auf eine erste Ausgestaltung des Wirbelsensors;
Fig. 2b: eine perspektivische Ansicht auf eine zweite Ausgestaltung des Wirbelsensors;
Fig. 3: einen Längsschnitt durch eine Ausgestaltung des Messsystems; und
Fig. 4: eine schematische Darstellung einer Ausgestaltung der Magnetfelderfassungseinheit.

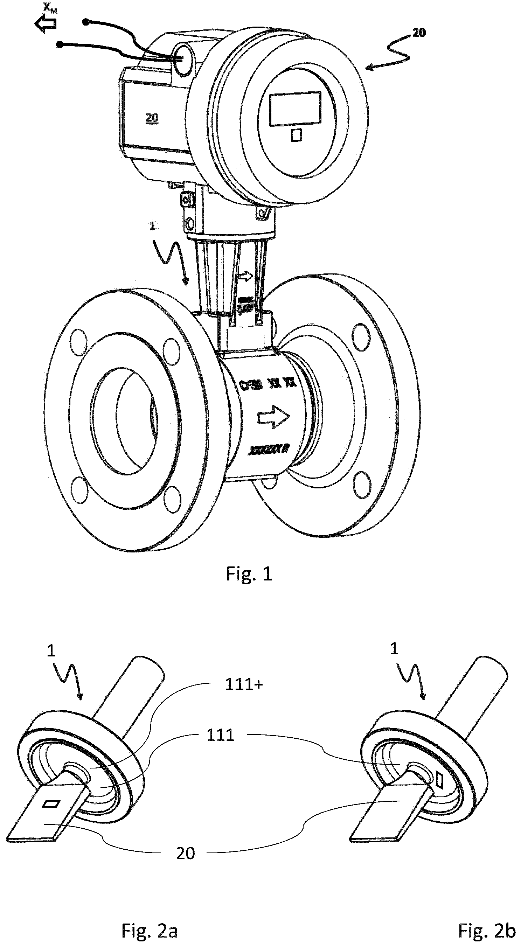

Fig. 1 zeigt eine perspektivische Ansicht auf ein Messsystem zum Messen wenigstens eines, ggf. auch zeitlich veränderlichen Strömungsparameters, wie z.B. einer Strömungsgeschwindigkeit *v* und/oder einem Volumenstrom *V'*, eines in einer Rohrleitung strömenden Fluids, beispielsweise eines heißen, insb. zumindest zeitweise eine Temperatur von mehr als 200°C aufweisenden, und/oder zumindest zeitweise unter einem hohen Druck, insb. von mehr als 100 bar, stehenden Gases, insbesondere ein Vortex-Durchflussmessgerät. Die Rohrleitung kann beispielsweise als Anlagenkomponente eines Wärmeversorgungsnetzes oder eines Turbinenkreislaufes ausgebildet, mithin kann das Fluid beispielsweise Dampf, insb. auch gesättigter Dampf oder überhitzter Dampf, oder beispielsweise auch ein aus einer Dampfleitung abgeführtes Kondensat sein. Fluid kann aber beispielsweise auch ein (komprimiertes) Erd- oder ein Biogas sein, mithin kann die Rohrleitung beispielsweise auch Komponente einer Erd- oder einer Biogasanlage oder einer Gasversorgungsnetzes sein.

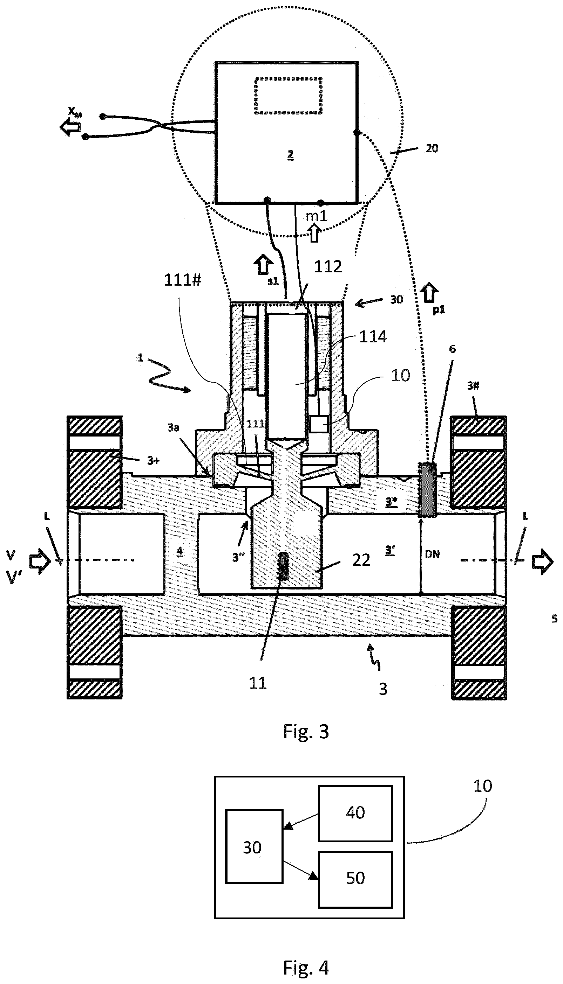

Das Messsystem weist einen - in Fig. 3 nochmals vergrößert dargestellten - Wirbelsensor 1 auf, der dafür vorgesehen bzw. ausgestaltet ist, Druckschwankungen im in einer (Haupt-)Strömungsrichtung am Sensor vorbei strömenden Fluid zu erfassen und in ein mit nämlichen Druckschwankungen korrespondierendes, beispielsweise elektrisches oder optisches, Sensorsignal s1 zu wandeln. Wie aus der Zusammenschau der Fig. 1 und 3 ersichtlich, umfaßt das Messsystem desweiteren, eine - beispielsweise in einem druck- und/oder schlagfesten Schutzgehäuse 20 untergebrachte - Umformer-Elektronik 2, die an den Wirbelsensor 1 angeschlossen ist bzw. im Betrieb des Messsystems mit dem Wirbelsensor 1 kommuniziert. Die Umformer-Elektronik 2 ist im besonderen dafür eingerichtet, das Sensorsignal s1 zu empfangen und zu verarbeiten, beispielsweise nämlich den wenigstens einen Strömungsparameters, beispielsweise also die Strömungsgeschwindigkeit v bzw. die Volumendurchflußrate V', repräsentierende Messwerte XM zu generieren. Die Messwerte XM können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden.

Das Schutzgehäuse 20 für die Umformer-Elektronik 2 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein.

Der Wirbelsensor 1 umfaßt, wie auch in Fig. 3 dargestellt bzw. aus einer Zusammenschau der Fig. 2a/b und 3 ohne weiteres ersichtlich, einen, insb. membranartigen bzw. scheibenförmigen, Verformungskörper 111 sowie eine eine linksseitige erste Seitenfläche und eine rechtsseitige zweite Seitenfläche aufweisende Sensorfahne 22, die sich ausgehend von einer ersten Oberfläche 111+ des Verformungskörpers 111 bis zu einem distalen, nämlich vom Verformungskörper 111 bzw. dessen Oberfläche 111+ entfernten (freien) Ende erstreckt. Der Verformungskörper 111 weist ferner eine der ersten Oberfläche 111+ gegenüberliegende, beispielsweise zur ersten Oberfläche 111+ zumindest teilweise parallele, zweite Oberfläche 111# auf. Der Verformungskörper 111 und die Sensorfahne 22 können beispielsweise Bestandteile ein und desselben monolithischen Formteils sein, das beispielsweise gegossen oder durch ein generatives Verfahren, wie etwa 3D-Laserschmelzen, hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 111 kann zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne zumindest anteilig aus einem Metall, beispielsweisenämlich einem Edelstahl bzw. einer Nickelbasislegierung, bestehen; insbesondere können der Verformungskörper 111 und die Sensorfahne 22 auch aus dem gleichen Material hergestellt werden. Der Verformungskörper 111 und die Sensorfahne 22 sind zudem im besonderen dafür eingerichtet, zu - typischerweise erzwungenen - Schwingungen um eine gemeinsame statischen Ruhelage angeregt zu werden, derart, daß die Sensorfahne 22 den Verformungskörper 111 elastisch verformende Pendelbewegungen in einer - im wesentlichen quer zur vorbezeichneten Strömungsrichtung verlaufenden - Detektionsrichtung ausführt. Die Sensorfahne 22 weist dementsprechend eine Breite, gemessen als eine maximale Erstreckung in Richtung der Strömungsrichtung, auf die wesentlich größer ist, als eine Dicke der Sensorfahne 22, gemessen als eine maximale seitlich Erstreckung in Richtung der Detektionsrichtung. Die Sensorfahne 22 kann zudem, wie bei derartigen Sensoren durchaus üblich, beispielsweise keilförmig oder auch als eine relativ dünne, ebene Platte ausgebildet sein.

Außer der Sensorfahne 22 und dem Verformungskörper 111 weist der Wirbelsensor 1 ferner eine sich ausgehend von einem, beispielsweise kreisförmig, umlaufenden Randsegment der zweiten Oberfläche 111# des Verformungskörpers erstreckende Anschlußhülse 113 auf. Zum Erfassen von Schwingungen von Verformungskörper 111 und Sensorfahne weist der Wirbelsensor 1 darüberhinaus wenigstens ein innerhalb der Anschlußhülse 113 angeordnetes, die Oberfläche 111+ des Verformungskörpers mit einer ersten Kontaktfläche kontaktierendes, insb. scheibenförmiges und/oder piezokeramisches, Wandlerelement 112 zum Generieren eines zeitlich ändernde, insb. zumindest zeitweise periodische, Bewegungen der Sensorfahne bzw. gleichermaßen zeitlich ändernde, insb. zumindest zeitweise periodische, Verformungen des Verformungskörpers 111 repräsentierenden elektrischen Sensorsignals, beispielsweise mit einer mit den vorbezeichneten Bewegungen korrespondierenden elektrischen (Wechsel-)Spannung, auf.

Nach einer weiteren Ausgestaltung der Erfindung umfaßt das Messsystem ferner ein in der Verlauf der vorbezeichneten Rohrleitung einsetzbares Rohr 3 mit einem von einer - beispielsweise metallischen - Wandung 3* des Rohrs umhüllten Lumen 3', das sich von einem Einlaßende 3+ bis zu einem Auslassende 3# erstreckt und das dafür eingerichtet ist, das in der Rohrleitung strömende Fluid zu führen. Der Wirbelsensor 1 ist zudem in nämliches Rohr eingesetzt, derart, daß die erste Oberfläche des Verformungskörpers 111 dem Lumen 3' des Rohrs zugewandt ist, mithin die Sensorfahne in nämliches Lumen hineinragt. Im hier gezeigten Ausführungsbeispiel ist am Einlassende 3+ wie auch am Auslassende 3# ferner jeweils ein dem Herstellen einer Leckage freien Flanschverbindung mit jeweils einem korrespondierenden Flansch an einem ein- bzw. auslaßseitig Leitunsgsegment der Rohrleitung dienender Flansch vorgesehen. Desweiteren kann das Rohr 3, wie in Fig. 1 oder 3 dargestellt, im wesentlichen gerade, beispielsweise nämlich als Hohlzylinder mit kreisförmigem Querschnitt ausgebildet sein, derart, daß das Rohr 3 eine das Einlaßende 3+ und das Auslaßende 3# imaginär verbindende gedachte gerade Längsachse L aufweist. Der Wirbelsensor 1 ist im in Fig. 1 bzw. 3 gezeigten Ausführungsbeispiel von außen durch eine in der Wandung eingeformte Öffnung 3" hindurch in das Lumen des Rohrs eingeführt und im Bereich nämlicher Öffnung - beispielsweise auch wieder lösbar - von außen an der Wandung 3* fixiert, und zwar so, daß die Oberfläche 111+ des Verformungskörpers 111 dem Lumen 3' des Rohrs 3 zugewandt ist, mithin die Sensorfahne 22 in nämliches Lumen hineinragt. Insbesondere ist der Wirbelsensor 1 so in die Öffnung 3"eingesetzt, daß der Verformungskörper 111 die Öffnung 3" überdeckt bzw. hermetisch verschließt. Nämliche Öffnung kann beispielsweise so ausgebildet sein, daß sie - wie bei Messsystemen der in Rede stehenden Art durchaus üblich - einen (Innen-)Durchmesser aufweist, der in einem Bereich zwischen 10 mm und ca. 50 mm liegt. Nach einer weiteren Ausgestaltung der Erfindung ist in der der Öffnung 3" eine dem Haltern des Verformungskörpers 111 bzw. des damit gebildeten Sensors 1 an der Wandung 3* dienende Fassung 3a ausgebildet. Der Wirbelsensor 1 kann hierbei beispielsweise durch stoffschlüssiges Verbinden, insb. nämlich durch Verschweißen oder Verlöten, von Verformungskörper 111 und Wandung 3* am Rohr 3 fixiert sein; er kann aber beispielsweise auch mit dem Rohr 3 lösbar verbundenen, beispielsweise nämlich ver- bzw. angeschraubt sein. In der Fassung 3a kann ferner wenigstens eine, beispielsweise auch umlaufende bzw. kreisringartige, Dichtfläche ausgebildet sein, die dafür eingerichtet ist, im Zusammenspiel mit dem Verformungskörper 111 und einem ggf. vorgesehenen, beispielsweise ringförmige oder ringscheibenförmige, Dichtelement die Öffnung 3" entsprechend abzudichten.

Im in Fig. 1 bzw. 3 gezeigten Ausführungsbeispiel ist das Messsystem speziell als ein Vortex-Durchflußmeßgrät mit einem im Lumen des Rohrs 3 - hier nämlich stromaufwärts des Sensors 1, nämlich in (Haupt-)Strömungsrichtung gesehen vor dem Sensor - angeordneten, dem Bewirken einer Kármánsche Wirbelstrasse im strömenden Fluid dienenden Stauköper 4 ausgebildet. Sensor und Staukörper sind hierbei im besonderen so dimensioniert und angeordnet, daß die Sensorfahne 22 in einem solchen Bereich in das Lumen 3* des Rohrs bzw. das darin geführte Fluid hineinragt, der im Betrieb des Messsystems regelmäßig von einer (stationär ausgebildeten) Kármánschen Wirbelstrasse eingenommen wird, so daß die mittels des Sensors 1 erfaßten Druckschwankungen durch am Staukörper 4 mit einer Ablöserate (~ 1/*f_{Vtx}*) abgelöste Wirbel verursachte periodische Druckschwankungen sind und das Sensorsignal s1 eine mit der Ablöserate nämlicher Wirbel korrespondierende Signalfrequenz (~ *f_{Vtx}*) aufweist. Im hier gezeigten Ausführungsbeispiel ist das Wirbel-Durchflußmeßgrät zudem als ein Messsystem in Kompaktbauweise ausgebildet, bei dem die Mess-Elektronik 2 in einem - beispielsweise mittels eines halsförmigen Anschlußstutzen 30 - am Rohr gehalterten Schutzgehäuse 20 untergebracht ist.

Zum Kompensieren von aus allfälligen Bewegungen des Sensors - etwa infolge von Vibration der vorbezeichneten, an das Rohr angeschlossenen Rohrleitung - resultierenden Kräften und/oder Momenten bzw. zum Vermeiden von daraus resultierenden unerwünschten, nämlich das Sensorsignal s1 verfälschenden Bewegungen der Sensorfahne bzw. des Verformungskörpers 111 weist der Wirbelsensor 1 nach einer weiteren Ausgestaltung der Erfindung ferner einen sich ausgehend von der zweiten Oberfläche 111# des Verformungskörpers 111 erstreckenden, beispielsweise stab-, platten- oder hülsenförmigen, Ausgleichskörper 114 auf. Der Ausgleichskörper 114 kann beispielsweise aus dem gleichen Material bestehen, wie der Verformungskörper und/oder wie die Sensorfahne, beispielsweise einem Metall. Beispielsweise kann der Ausgleichskörper 114 nämlich aus einem Edelstahl bzw. einer Nickelbasislegierung hergestellt sein. Nach einer weiteren Ausgestaltung der Erfindung sind Verformungskörper 111 und Ausgleichskörper 114 stoffschlüssig miteinander verbunden, beispielsweise miteinander verschweißt bzw. verlötet, mithin ist vorgesehen, Ausgleichskörper 114 und Verformungskörper 111 aus entsprechend stoffschlüssig miteinander verbindbaren Materialien herzustellen. Alternativ können Verformungskörper 111 und Ausgleichskörper 114 aber auch Bestandteile ein und desselben monolithischen Formteils sein, beispielsweise auch derart, daß Sensorfahne 111, Verformungskörper 112 und Ausgleichskörper 114 Bestandteile nämlichen Formteils sind. Sensorfahne 22 und Ausgleichskörper 114 können desweiteren zueinander fluchtend angeordnet sein, derart, daß eine Trägheitshauptachse der Sensorfahne 22 in Verlängerung mit einer Trägheitshauptachse des Ausgleichskörpers 114 koinzidiert. Alternativ oder in Ergänzung können der Ausgleichskörper 114 und der Verformungskörper 111 zudem so positioniert und zueinander ausgerichtet sein, daß eine Trägheitshauptachse des Verformungskörpers 111 in Verlängerung mit einer Trägheitshauptachse des Ausgleichskörpers 114 koinzidiert.

Fig 1 in Verbindung mit der 3 zeigt, dass der Wirbelsensor 1 ein magnetostriktives Material 11 und eine Magnetfelderfassungseinheit 10, die dazu eingerichtet ist, eine Änderung eines Magnetfeldes zu messen, die durch die Einwirkung von mechanischen Kräften auf das magnetostriktive Material 11 erzeugt wird und die dazu eingerichtet ist, ein nämliche Einwirkung repräsentierendes, insbesondere elektrisches oder optisches, Magnetfelderfassungssignal m1 bereitzustellen. Die Umformer-Elektronik 2 ist dazu geeignet und eingerichtet, anhand des wenigstens einen Wirbelsensorsignals, insbesondere digitale, Messwerten *X_{M}* für den wenigstens einen Strömungsparameter zu ermitteln und eine Funktionstüchtigkeit und/oder eine Plausibilitätsaussage über das von dem Wirbelsensor 1 gelieferte Wirbelsensorsignal s1 in Abhängigkeit des Magnetfelderfassungssignales m1 zu ermitteln.

Erfindungsgemäß ist eine geeignete Magnetfelderfassungseinheit 10 vorgesehen, die das Magnetfeld misst, das infolge der auf die schwingfähige Einheit 4 einwirkenden mechanischen Kräfte in dem magnetostriktiven Material auftritt (Villari-Effekt). Eine Regel-/Auswerteeinheit, die Teil der Umformer-Elektronik 2 des Messsystems ist, generiert anhand des gemessenen Magnetfeldes eine Aussage über die Funktionstüchtigkeit des Wirbelsensors 1 und/oder macht eine Plausibilitätsaussage über das von dem Wirbelsensor gelieferten Wirbelsensorsignal s1.

Bevorzugt handelt es sich bei der Magnetfelderfassungseinheit 10 um einen Quantensensor. Unterschiedliche Ausgestaltungen von Quantensensoren wurden zuvor bereits ausführlich beschrieben, so dass an dieser Stelle auf eine Wiederholung verzichtet werden kann. Quantensensoren haben gegenüber herkömmlichen Magnetfelderfassungssensoren, wie z.B. Hallsensoren, den Vorteil, dass sie bezüglich ihrer Dimensionierung klein sind - sich also auch bevorzugt in den vibronischen Sensor 1 integrieren lassen - und dabei äußerst sensitiv messen. Selbstverständlich ist es auch möglich, die Magnetfelderfassungseinheit 10 als separate Komponente auszugestalten und außerhalb des Wirbelsensors 1 derart zu platzieren, dass das Magnetfeld gemessen wird. Das magnetostriktiven Material 11 erzeugt unter Zuhilfenahme eines Magneten, z.B. eines Permanentmagneten, der ein Offset-Magnetfeld erzeugt, ein Magnetfeld, das von der Magnetfelderfassungseinheit 10 mit der erforderlichen Genauigkeit gemessen werden kann. Das magnetostriktive Material 11 selbst erzeugt kein eigenes Magnetfeld, verändert aber unter dem Einfluss einer einwirkenden Kraft seine Permeabilität µ. Daher ist es erforderlich, ein Offset-Magnetfeld zu erzeugen, z.B. durch einen Permanentmagneten oder eine Spule, um die Änderung des Magnetfeldes infolge einer auf das magnetostriktive Material 11 einwirkenden Kraft zu messen. Obwohl der Einsatz eines Quantensensors zur Ermittlung des Magnetfelds in Verbindung mit der vorliegenden Erfindung präferiert wird, versteht es sich von selbst, dass je nach Ausgestaltung und Anordnung des magnetostriktiven Materials 11 und des Permanentmagneten an dem Wirbelsensor 1 auch ein herkömmlicher Magnetfeldsensor zum Einsatz kommen kann.

Fig. 2a zeigt eine perspektivische Ansicht auf eine erste Ausgestaltung des Wirbelsensors 1. Die Sensorfahne 22 ist zumindest abschnittsweise mit dem magnetostriktiven Material 11 beschichtet bzw. zumindest abschnittsweise durch einen das magnetostriktiven Material 11 aufweisenden Körper bedeckt.

Fig. 2b zeigt eine perspektivische Ansicht auf eine zweite Ausgestaltung des Wirbelsensors 1. Der Verformungskörper 111 ist zumindest abschnittsweise mit dem magnetostriktiven Material 11 beschichtet. Der Verformungskörper 111 oder die Sensorfahne 22 weisen gemäß zumindest in einem Teilbereich, in dem eine maximale mechanische Spannung oder eine maximale Auslenkung bei der Schwingung um die statische Ruhelage auftritt das magnetostriktiven Material 11 auf.

Alternativ kann die Sensorfahne 22 und/oder der Verformungskörper 111 aus dem magnetostriktiven Material 11 gefertigt sein.

Der in Fig. 4 schematisch dargestellte Quantensensor umfasst mindestens ein magnetfeldempfindliches Stickstoff-Fehlstellen-Zentrum (NV-Zentrum) in einem Diamanten. Die folgenden Überlegungen lassen sich auf andere Kristallkörper 30 mit entsprechenden Fehlstellen übertragen.

Im Diamant ist typischerweise jedes Kohlenstoffatom mit vier weiteren Kohlenstoffatomen kovalent verbunden. Ein Stickstoff-Fehlstellen-Zentrum (NV-Zentrum) besteht aus einer Fehlstelle im Diamantgitter, also einem unbesetzten Gitterplatz, und einem Stickstoffatom als einem der vier Nachbaratome. Insbesondere die negativ geladenen NV⁻-Zentren sind für die Anregung und Auswertung von Fluoreszenzsignalen von Bedeutung. Im Energieschema eines negativ geladenen NV-Zentrums findet sich neben einem Triplett-Grundzustand ³A ein angeregter Triplett-Zustand ³E, welche jeweils drei magnetische Unterzustände mₛ = 0, ±1 aufweisen. Weiterhin befinden sich zwei metastabile Singulett-Zustände ¹A und ¹E zwischen dem Grundzustand ³A und dem angeregten Zustand ³E. In Abwesenheit eines externen Magnetfelds tritt eine Aufspaltung der beiden Zustände mₛ = +/-1 von dem Grundzustand mₛ = 0 auf, welche als Nullfeldaufspaltung Δ bezeichnet wird und welche abhängig von der Temperatur T ist.

Durch Anregungslichtaus dem grünen Bereich des sichtbaren Spektrums, also z.B. ein Anregungslicht mit einer Wellenlänge von 532 nm, findet eine Anregung eines Elektrons aus dem Grundzustand 3A in einen Vibrationszustand des angeregten Zustand 3E statt, welches unter Aussenden eines Fluoreszenz-Photons mit einer Wellenlänge von 630 nm in den Grundzustand 3A zurückkehrt. Dieses Fluoreszenzsignal ist ein Maß für die Nullfeldaufspaltung Δ und kann zur Bestimmung und/oder Überwachung der Temperatur T herangezogen werden.

Ein angelegtes Magnetfeld mit einer magnetischen Flussdichte führt zu einer Aufspaltung (Zeeman-Splitting) der magnetischen Unterzustände, so dass der Grundzustand aus drei energetisch separierten Unterzuständen besteht, von denen jeweils eine Anregung erfolgen kann. Die Intensität des Fluoreszenzsignals ist jedoch abhängig von dem jeweiligen magnetischen Unterzustand, von dem aus angeregt wurde, so dass anhand des Abstands der Fluoreszenzminima beispielsweise die magnetische Flussdichte B mithilfe der Zeeman-Formel berechnet werden kann. Dieses Prinzip macht man sich in Magnetfelderfassungseinheiten mit einer mikrowellenerzeugenden Vorrichtung zu nutze. In dem Fall lassen sich somit die magnetische Flussdichte bzw. geringste Änderungen der magnetischen Flussdichte ermitteln. Es sind jedoch auch Quantensensoren bekannt, welche sich die Eigenschaften der ground-state level anti-crossing (GSLAC) zu nutze machen und somit mikrowellenfrei betrieben werden können. Für weitere Details dazu wird auf die Veröffentlichungen "Microwave-free magnetometry with nitrogen-vacancy centers in diamond" von Wickenbrock et al. und "NV-NV electron-electron spin and NV-NS electron - electron and electron-nuclear spin interaction in diamond" von Armstrong et al. Bezug genommen.

Im Rahmen der vorliegenden Erfindung sind weitere Möglichkeiten der Auswertung des Fluoreszenzsignals vorgesehen, wie beispielsweise die Auswertung der Intensität des Fluoreszenzlichts, welche dem angelegten Magnetfeld ebenfalls proportional ist. Eine elektrische Auswertung wiederum kann beispielsweise über eine Photocurrent Detection of Magnetic Resonance (engl. kurz PDMR) erfolgen. Alternativ können wie bereits beschrieben verschiedene Anrege-Abfragesequenzen zur gezielten Kontrolle und Manipulation der Kernspins eingesetzt werden. Neben diesen Beispielen zur Auswertung des Fluoreszenzsignals sind noch weitere Möglichkeiten vorhanden, welche ebenfalls unter die vorliegende Erfindung fallen.

Fig. 4 zeigt einen schematischen Längsschnitt durch eine Ausgestaltung der Magnetfelderfassungseinheit 10, insbesondere des Quantensensors. wobei die Magnetfelderfassungseinheit 10 eine, insbesondere optische, Anregungsvorrichtung 40 zur Anregung der Fehlstelle oder zur Anregung der Gaszelle und eine, ins-besondere optische, Detektionsvorrichtung 50 zur Detektion eines magnetfeldabhängigen Signals des Kristallkörpers 30 oder der Gaszelle aufweist. Die optische Anregungsvorrichtung 40 ist für das Anregen des Kristallkörpers dazu eingerichtet, ein optisches Anregungssignal, insbesondere Licht mit einer festen Frequenz, zu erzeugen, um das Fehlstellen-Zentrum im Kristallkörper zu polarisieren. Bei der Anregungsvorrichtung 40 kann es sich beispielsweise um eine Lichtquelle, insbesondere einem Laser handeln. Alternativ können auch eine Vielzahl an Fehlstellen-Zentren im Kristallkörper vorhanden sein. Die optische Detektionsvorrichtung 50 ist dazu eingerichtet, dass von dem Kristallkörper emittierte Fluoreszenzsignal zu detektieren und ein Messsignal bereitzustellen, welches die Intensität des Fluoreszenzsignales umfasst. Dafür eignet sich beispielsweise eine Photodiode in Kombination mit einem Lock-In Verstärker als optische Detektionsvorrichtung. Optional können Filter und Spiegel sowie weitere optische Elemente eingesetzte werden, um ein Anregungslicht zum Kristallkörper und/oder das Fluoreszenzsignal hin zur Detektionsvorrichtung zu lenken. Anstelle eines Kristallkörpers kann auch eine Vielzahl an Kristallkörpern in Form einer Kristallkörper-Beschichtung vorgesehen sein.

## Patentansprüche

1. Messsystem zum Messen wenigstens eines, insbesondere zeitlich veränderlichen, Strömungsparameters, insbesondere einer Strömungsgeschwindigkeit und/oder eines Volumenstroms und/oder eines Massenstroms, eines in einer Rohrleitung strömenden, fluiden Messstoffs, insbesondere nämlich eines Gases, einer Flüssigkeit oder einer Dispersion, welches Messsystem umfasst:
- ein in den Verlauf nämlicher Rohrleitung einsetzbares Rohr (3) mit einem Lumen (3'), das dafür eingerichtet ist, den in der Rohrleitung strömende Messstoff zu führen bzw. von nämlichem Messstoff durchströmt zu werden;
- einen im Lumen (3') des Rohrs (3) angeordneten, insbesondere prismatischen oder zylindrischen, Staukörper (4), der dafür eingerichtet ist, im daran vorbei strömenden Messstoff Wirbel mit einer von einer momentanen Strömungsgeschwindigkeit, u, nämlichen Messstoffs abhängigen Ablösefrequenz, *f_{V}* (*f_{V}*~*u*), zu generieren, derart, dass im stromabwärts des Staukörpers (4) strömenden Fluid eine Kármánsche Wirbelstrasse ausgebildet ist;
- einen stromabwärts des Staukörpers (4) angeordneten Wirbelsensor (1),
-- der wenigstens eine, insbesondere niedrigste und/oder stets oberhalb der Ablösefrequenz *f_{V}* liegende, mechanische Resonanzfrequenz, *f_{R}*, aufweist
-- der eingerichtet ist, angeregt vom strömenden Messstoff, mechanische Schwingungen um eine statische Ruhelage auszuführen und wenigstens ein nämliche Schwingungen repräsentierendes, insbesondere elektrisches oder optisches, Wirbelsensorsignal (s1) bereitzustellen,
-- und der ein magnetostriktives Material (11) aufweist;
- eine Magnetfelderfassungseinheit (10), die dazu eingerichtet ist, eine Änderung eines Magnetfeldes zu messen, die durch die Einwirkung von mechanischen Kräften auf das magnetostriktive Material (11) erzeugt wird und die dazu eingerichtet ist, ein nämliche Einwirkung repräsentierendes, insbesondere elektrisches oder optisches, Magnetfelderfassungssignal (m1) bereitzustellen;
- sowie eine, insbesondere mittels wenigstens eines Mikroprozessors gebildete, Umformer-Elektronik (2) zum Auswerten des wenigstens einen Wirbelsensorsignals, zum Ermitteln von, insbesondere digitalen, Messwerten (*X_{M}*) für den wenigstens einen Strömungsparameter und zum Ermitteln einer Funktionstüchtigkeit und/oder eine Plausibilitätsaussage über das von dem Wirbelsensor (1) gelieferte Wirbelsensorsignal in Abhängigkeit des Magnetfelderfassungssignales (m1).

2. Messsystem nach Anspruch 1,
wobei der Wirbelsensor (1) einen, insbesondere membranartigen und/oder scheibenförmigen, Verformungskörper (111) mit einer dem Lumen zugewandten ersten Oberfläche und einer gegenüberliegenden, insbesondere zur ersten Oberfläche zumindest teilweise parallelen, zweiten Oberfläche aufweist, und
wobei der Wirbelsensor (1) wenigstens ein oberhalb und/oder auf der zweiten Oberfläche des Verformungskörpers (111) angeordnetes, insbesondere nämlich am Verformungskörper (111) angebrachtes und/oder in dessen Nähe positioniertes, Wandlerelement (112) aufweist, das dafür eingerichtet ist, Bewegungen des Verformungskörpers (111), insbesondere von dessen zweiter Oberfläche, zu erfassen und in das Wirbelsensorsignal (s1) zu wandeln.

3. Messsystem nach Anspruch 2,
wobei der Wirbelsensor (1) eine sich ausgehend von der ersten Oberfläche des Verformungskörpers (111) bis zu einem distalen Ende erstreckende, insbesondere plattenförmige oder keilförmige, Sensorfahne (22) aufweist.

4. Messsystem nach Anspruch 2 oder 3,
wobei der Verformungskörper (111) aus dem magnetostriktiven Material (11) gefertigt, mit dem magnetostriktiven Material (11) beschichtet oder zumindest abschnittsweise durch einen das magnetostriktiven Material (11) aufweisenden Körper bedeckt ist.

5. Messsystem nach Anspruch 3,
wobei die Sensorfahne (22) aus dem magnetostriktiven Material (11) gefertigt, mit dem magnetostriktiven Material (11) beschichtet oder zumindest abschnittsweise durch einen das magnetostriktiven Material (11) aufweisenden Körper bedeckt ist.

6. Messsystem nach Anspruch 4 oder 5,
wobei der Verformungskörper (111) oder die Sensorfahne (22) zumindest in einem Teilbereich, in dem eine maximale mechanische Spannung oder eine maximale Auslenkung bei der Schwingung um die statische Ruhelage auftritt, mit der Beschichtung aus dem magnetostriktiven Material (11) versehen, aus dem magnetostriktiven Material (11) gefertigt oder durch den das magnetostriktive Material (11) aufweisenden Körper bedeckt ist.

7. Messsystem nach mindestens einem der vorherigen Ansprüche,
wobei es sich bei der Magnetfelderfassungseinheit (10) um einen Quantensensor handelt.

8. Messsystem nach Anspruch 7,
wobei der Quantensensor zumindest einen Kristallkörper (30) mit zumindest einer magnetfeldempfindlichen Fehlstelle aufweist.

9. Messsystem nach Anspruch 7,
wobei der Quantensensor zumindest eine Gaszelle aufweist.

10. Messsystem nach Anspruch 8 oder 9,
wobei die Magnetfelderfassungseinheit (10) eine, insbesondere optische, Anregungsvorrichtung (40) zur Anregung der Fehlstelle oder zur Anregung der Gaszelle und eine, insbesondere optische, Detektionsvorrichtung (50) zur Detektion eines magnetfeldabhängigen Signals des Kristallkörpers (30) oder der Gaszelle aufweist.

## Claims

1. Measuring system for measuring at least one flow parameter, in particular one that varies over time, in particular a flow velocity and/or a volume flow and/or a mass flow, of a fluid measuring substance flowing in a pipe system, in particular a gas, a liquid, or a dispersion, which measuring system comprises:
- a pipe (3) that can be inserted into the course of said pipe system with a lumen (3') that is designed to guide the measuring material flowing in the pipe or to said measuring medium;
- a bluff body, in particular of cylindrical, prismatic or similar cylindrical design, designed to generate vortices in the measuring medium flowing past it with a separation frequency, *f_{V}* (*f_{V}*~*u*), which depends on an instantaneous flow velocity, u, of the measuring medium, such that a Kármán vortex street is formed in the fluid flowing downstream of the damper (4);
- a vortex sensor (1) arranged downstream of the dam (4),
-- which has at least one mechanical resonance frequency, *f_{V}*, in particular the lowest and/or always above the separation frequency *f_{V}*,
-- which is designed to perform mechanical oscillations around a static rest position and to provide at least one vortex sensor signal (s1), in particular an electrical or optical signal, representing said oscillations,
-- and which has a magnetostrictive material (11);
- a magnetic field detection unit (10) which is designed to detect a change in a magnetic field generated by the action of mechanical forces on the magnetostrictive material (11) and which is used to provide a magnetic field detection signal (m1) representing a specific representing said action, in particular an electrical or optical magnetic field detection signal (m1);
- as well as a converter electronics (2) formed in particular by means of at least one microprocessor converter electronics (2) for evaluating the at least one vortex sensor signal, for determining, in particular digital, measured values (7 ) for the at least one flow parameter, and for determining a functional capability and/or a plausibility statement about the vortex sensor signal supplied by the vortex sensor (1) in depending on the magnetic field detection signal (m1).

2. Measuring system according to claim 1,
wherein the vibration sensor (1) has a deformation body (111), in particular a membrane-like and/or disc-shaped deformation body, with a first surface facing the lumen and an opposite surface, in particular facing the first surface at least partially parallel to the first surface, and
wherein the vortex sensor (1) comprises at least one transducer element (112) arranged above and/or on the second surface of the deformation body (111), in particular attached to the deformation body (111) and/or positioned in its vicinity, which is designed to detect movements of the
deformation body (111), in particular of its second surface, and to convert them into the vibration sensor signal (s1).

3. Measuring system according to claim 2,
wherein the vibration sensor (1) has a deformation body (111) extending from the first surface of the deformation body (111) to a distal end, in particular a plate-shaped or wedge-shaped sensor flag (22).

4. Measuring system according to claim 2 or 3,
wherein the deformation body (111) is made of the magnetostrictive material (11) or at least partially covered by a body comprising the magnetostrictive material (11).

5. Measuring system according to claim 3,
wherein the sensor flag (22) is made of the magnetostrictive material (11), coated with the magnetostrictive material (11), or at least partially covered by a body comprising the magnetostrictive material (11).

6. Measuring system according to claim 4 or 5,
wherein the deformation body (111) or the sensor flag (22) is made of the magnetostrictive material (11) or coated with the magnetostrictive material (11) or at least covered in sections by a body comprising the magnetostrictive material (11).
deflection occurs during oscillation around the static rest position, is provided with the coating of the magnetostrictive material (11), is manufactured from the magnetostrictive material
(11) or covered by the body having the magnetostrictive material (11).

7. Measuring system according to at least one of the preceding claims,
wherein the magnetic field detection unit (10) is a quantum sensor.

8. Measurement system according to claim 7,
wherein the quantum sensor comprises at least one crystal body (30) with at least one magnetic field-sensitive defect.

9. Measuring system according to claim 7,
wherein the quantum sensor comprises at least one gas cell.

10. Measuring system according to claim 8 or 9,
wherein the magnetic field detection unit (10) comprises an excitation device (40), in particular an optical excitation device, for exciting the defect or for exciting the gas cell and a detection device (50), in particular an optical detection device, for detecting a magnetic field-dependent signal from the crystal body (30) or the gas cell.

## Revendications

1. Système de mesure pour mesurer au moins un paramètre d'écoulement, en particulier variable dans le temps, en particulier une vitesse d'écoulement et/ou un débit volumique et/ou d'un débit massique, d'un fluide à mesurer s'écoulant dans une conduite, en particulier d'un gaz, d'un liquide ou d'une dispersion, lequel système de mesure comprend :
- un tube (3) pouvant être inséré dans le tracé de ladite conduite, avec une lumière (3') qui est conçue pour guider le fluide à mesurer s'écoulant dans la conduite ou pour le séparer de celle-ci
ledit fluide à mesurer ;
- un corps de retenue (4) en particulier prismatique ou
cylindrique, qui est conçu pour générer, dans le fluide à mesurer qui s'écoule à proximité, des tourbillons avec une fréquence de détachement *f_{V}* (*f_{V}*~u) dépendant de la vitesse d'écoulement instantanée u du fluide à mesurer, de telle sorte que
une traînée de tourbillons de Kármán se forme dans le fluide s'écoulant en aval de l'élément de retenue (4) ;
- un capteur de tourbillon (1) disposé en aval du corps de retenue (4),
-- qui présente au moins une fréquence de résonance mécanique, *f_{V},* en particulier la plus basse et/ou toujours supérieure à la fréquence de détachement *f_{V}*
-- qui est conçu pour effectuer des oscillations mécaniques, sous l'effet du fluide mesuré en écoulement
autour d'une position de repos statique et à fournir au moins un signal de capteur de tourbillon (s1), en particulier électrique ou optique, représentant lesdites vibrations,
-- et qui présente un matériau magnétostrictif (11) ;
- une unité de détection de champ magnétique (10) qui est conçue pour détecter une modification d'un
champ magnétique généré par l'action de forces mécaniques sur le matériau magnétostrictif (11) et qui est un signal de détection de champ magnétique (m1), représentant cette action, en particulier électrique ou optique ;
- un convertisseur electronique (2), en particulier formée au moyen d'au moins un microprocesseur, pour évaluer le au moins un signal de capteur de tourbillon, pour déterminer des valeurs de mesure, en particulier numériques (7), pour le au moins un paramètre d'écoulement et pour déterminer une fonctionnalité et/ou une déclaration de plausibilité concernant le signal de capteur de tourbillon fourni par le capteur de tourbillon (1) dans fonction du signal de détection de champ magnétique (m1).

2. Système de mesure selon la revendication 1,
le capteur de vibrations (1) comportant un corps déformable (111), en particulier de type membrane et/ou en forme de disque, avec une première surface tournée vers la lumière et une surface opposée, en particulier par rapport à la première surface au moins partiellement parallèle à la première surface, et
le capteur de vibrations (1) comportant au moins un élément transducteur (112) disposé au-dessus et/ou sur la deuxième surface du corps déformable (111), en particulier fixé au corps déformable (111) et/ou positionné à proximité de celui-ci, qui est conçu pour détecter les mouvements du corps déformable (111), en particulier de sa deuxième surface, et à les convertir en signal de capteur de vibrations (s1).

3. Système de mesure selon la revendication 2,
le capteur de vibrations (1) comportant un élément transducteur (112) disposé à partir de la première surface du corps déformable (111) jusqu'à une extrémité distale, en particulier en forme de plaque ou de coin.

4. Système de mesure selon la revendication 2 ou 3,
le corps déformable (111) étant constitué du matériau magnétostrictif (11), est recouvert du matériau magnétostrictif (11) ou est recouvert au moins par sections d'un corps comportant le matériau magnétostrictif (11).

5. Système de mesure selon la revendication 3,
la languette de capteur (22) étant fabriquée à partir du matériau magnétostrictif (11), recouverte du matériau magnétostrictif (11) ou au moins recouverte par sections par un corps comportant le matériau magnétostrictif (11).

6. Système de mesure selon la revendication 4 ou 5,
dans lequel le corps déformable (111) ou la languette de capteur (22) est recouvert, au moins dans une zone partielle dans laquelle une contrainte mécanique maximale ou une contrainte maximale déviation maximale lors de l'oscillation autour de la position statique de repos, est pourvu du revêtement en matériau magnétostrictif (11), est fabriqué à partir du matériau magnétostrictif (11) ou recouverte par le corps comportant le matériau magnétostrictif (11).

7. Système de mesure selon au moins l'une des revendications précédentes,
dans lequel l'unité de détection de champ magnétique (10) est un capteur quantique.

8. Système de mesure selon la revendication 7,
dans lequel le capteur quantique comprend au moins un corps cristallin (30) avec au moins un défaut sensible au champ magnétique.

9. Système de mesure selon la revendication 7,
le capteur quantique comportant au moins une cellule à gaz.

10. Système de mesure selon la revendication 8 ou 9,
dans lequel l'unité de détection de champ magnétique (10) comprend un dispositif d'excitation (40), en particulier optique, pour exciter le défaut ou pour exciter la cellule à gaz et un dispositif de détection (50), en particulier optique, pour détecter un signal dépendant du champ magnétique du corps cristallin (30) ou de la cellule à gaz.
